# EUROPEAN PATENT SPECIFICATION

(11) **EP 1 065 825 B1**
(45) Date of publication and mention of the grant of the patent: **11.05.2005**
(21) Application number: 00113099.6
(22) Date of filing: 27.06.2000
(51) Int. Cl.: H04L 7/04, H04J 3/06, H04J 13/02, H04B 7/26, H04L 5/14, H04B 1/707

(54) **Time division duplex synchronization**
Synchronisierung von zeitverteilten Duplex
Synchronisation de duplex en division temporelle

(30) Priority: 28.06.1999 US 141341 P; 26.08.1999 US 150897 P; 14.03.2000 US 189350 P
(43) Date of publication of application: 03.01.2001
(73) Proprietor: Texas Instruments Incorporated, Dallas, TX 75251 (US)
(72) Inventor: Hosur, Srinath, Plano, TX 75025 (US); Dabak, Anand G., Plano, TX 75025 (US); Sriram, Sundararajan, Plano, TX 75025 (US)
(74) Representative: Degwert, Hartmut, Dipl.-Phys.

(56) References cited:
- SRIRAM S ET AL: "Fast acquisition method for DS-CDMA systems employing asynchronous base stations" COMMUNICATIONS, 1999. ICC '99. 1999 IEEE INTERNATIONAL CONFERENCE ON VANCOUVER, BC, CANADA 6-10 JUNE 1999, PISCATAWAY, NJ, USA,IEEE, US, 6 June 1999 (1999-06-06), pages 1928-1932, XP010333521 ISBN: 0-7803-5284-X
- LUNDQVIST A ET AL: "A coding-theoretical view on code division multiple access: two new constructions of CDMA codes" VEHICULAR TECHNOLOGY CONFERENCE, 1994 IEEE 44TH STOCKHOLM, SWEDEN 8-10 JUNE 1994, NEW YORK, NY, USA,IEEE, 8 June 1994 (1994-06-08), pages 550-553, XP010123371 ISBN: 0-7803-1927-3

## Description

### BACKGROUND OF THE INVENTION

### 1. Field of the invention

The invention relates to communications, and more particularly to spread spectrum digital communications and related systems and methods.

### 2. Background

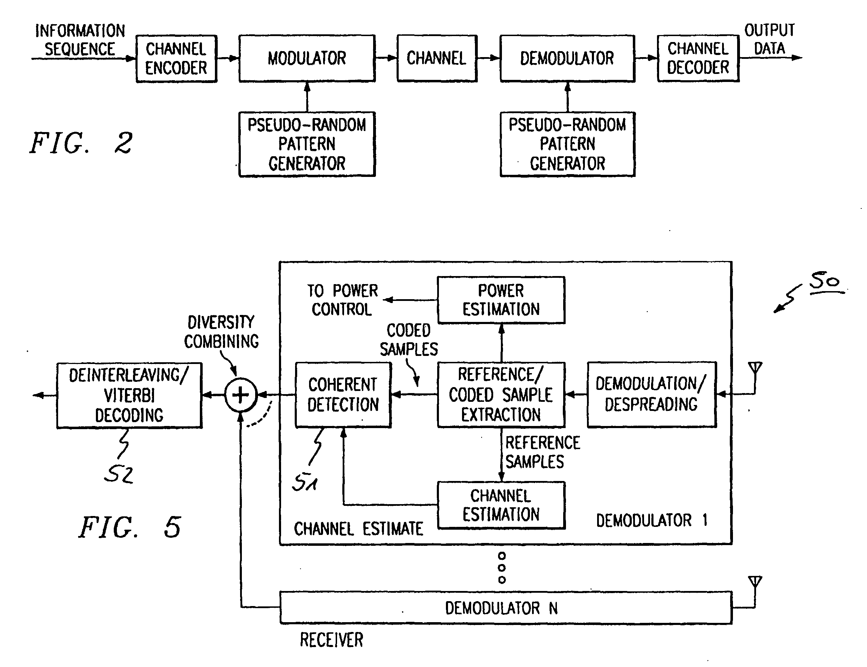

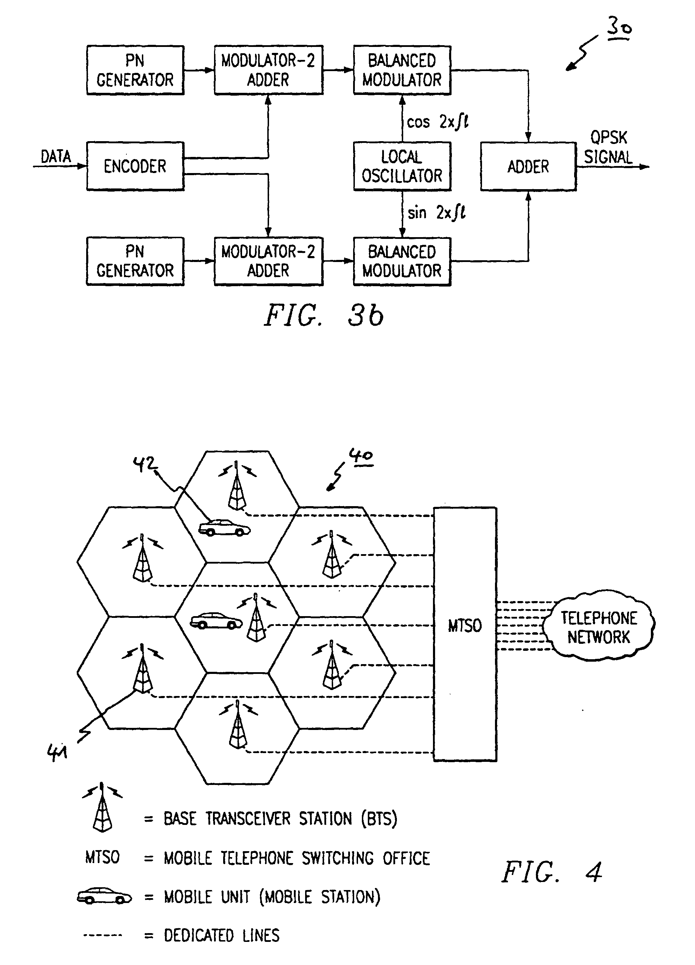

Spread spectrum wireless communications utilize a radio frequency bandwidth greater than the minimum bandwidth required for the transmitted data rate, but many users may simultaneously occupy the bandwidth. Each of the users has a pseudo-random code for "spreading" information to encode it and for "despreading" (by correlation) the spread spectrum signal for recovery of the corresponding information. Figure 2 shows a system block diagram, and Figures 3a-3b illustrates pseudo-random code plus a QPSK (quadrature phase-shift keying) encoder. This multiple access is typically called code division multiple access (CDMA). The pseudo-random code may be an orthogonal (Walsh) code, a pseudo-noise (PN) code, a Gold code, or combinations (modulo-2 additions) of such codes. After despreading the received signal at the correct time instant, the user recovers the corresponding information while the remaining interfering signals appear noise-like. For example, the interim standard IS-95 for such CDMA communications employs channels of 1.25 MHz bandwidth and a code pulse interval (chip) T_{c} of 0.8138 microsecond with a transmitted symbol (bit) lasting 64 chips. The recent wideband CDMA (WCDMA) proposal employs a 3.84 MHz bandwidth and the CDMA code length applied to each information symbol may vary from 4 chips to 256 chips. The CDMA code for each user is typically produced as the modulo-2 addition of a Walsh code with a pseudo-random code (two pseudo-random codes for QPSK modulation) to improve the noise-like nature of the resulting signal. A cellular system as illustrated in Figure 4 could employ IS-95 or WCDMA for the air interface between the base station and the mobile user station.

A spread spectrum receiver synchronizes with the transmitter by code acquisition followed by code tracking. Code acquisition performs an initial search to bring the phase of the receiver's local code generator to within typically a half chip of the transmitter's, and code tracking maintains fine alignment of chip boundaries of the incoming and locally generated codes. Conventional code tracking utilizes a delay-lock loop (DLL) or a tau-dither loop (TDL), both of which are based on the well-known early-late gate principle.

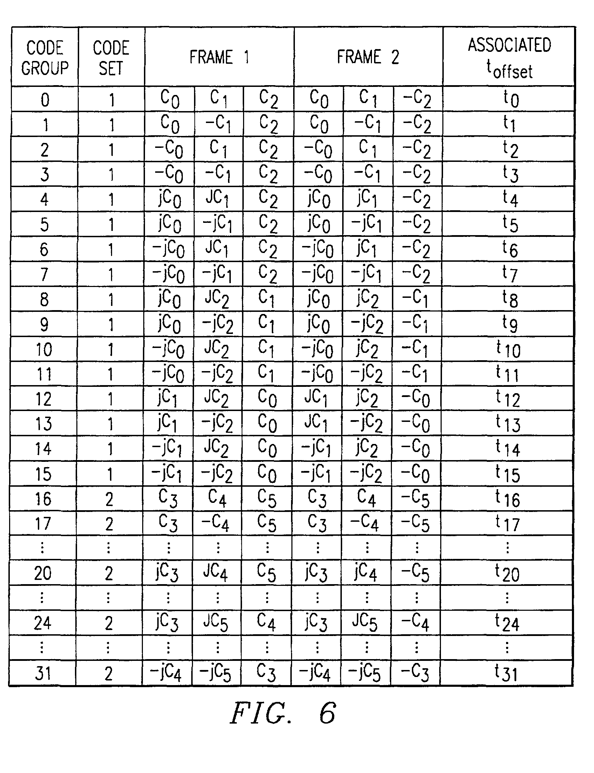

In a multipath situation a RAKE receiver has individual demodulators (fingers) tracking separate paths and combines the results to improve signal-to-noise ratio (SNR), typically according to a method such as maximal ratio combining (MRC) in which the individual detected signals are synchronized and weighted according to their signal strengths. A RAKE receiver usually has a DLL or TDL code tracking loop for each finger together with control circuitry for assigning tracking units to received signal paths. Figure 5 illustrates a receiver with N fingres.

The UMTS (universal mobile telecommunications system) approach UTRA (UMTS terrestrial radio access) provides a spread spectrum cellular air interface with both FDD (frequency division duplex) and TDD (time division duplex) modes of operation. UTRA currently employs 10 ms duration frames partitioned into 15 time slots with each time slot consisting of 2560 chips. In FDD mode the base station and the mobile user transmit on different frequencies, whereas in TDD mode a time slot may be allocated to transmissions by either the base station (downlink) or a mobile user (uplink). In addition, TDD systems are differentiated from the FDD systems by the presence of interference cancellation at the receiver. The spreading gain for TDD systems is small (8-16), and the absence of the long spreading code implies that the multi-user multipath interference does not look Gaussian and needs to be canceled at the receiver.

In currently proposed UTRA a mobile user performs an initial cell search when first turned on or entering a new cell; this search detects transmissions of base stations on the physical synchronization channel (PSCH) without any scrambling. The initial cell search by a mobile user must determine timing (time slot and frame) plus identify pertinent parameters of the found cell such as scrambling code(s).

For FDD mode the physical synchronization channel appears in each of the 16 time slots of a frame and occupies 256 chips out of the 2560 chips of the time slot. Thus a base station transmitting in the synchronization channel a repeated primary synchronization code of pseudo-noise of length 256 chips modulated by a length 16 comma-free code (CFC) allows a moblie user to synchronize by first synchronizing to the 256-chip pseudo-random code to set slot timing and then using the cyclic shift uniqueness of a CFC to set frame timing. Further, decoding the CFC by the mobile user reveals the scrambling code used by the base station.

The article "Fast Acquisition Method for DS-CDMA Systems Employing Asynchronous Base Stations" by S. Sriram et al, IEEE International Conference on Communications (1999), pp. 1928-1932, discloses synchronization in a frequency division duplex CDMA system using periodic base station transmissions in the synchronization channel CSC and Cⱼ, where CSC is the common synchronization code and Cⱼ is taken from a set of short codes {SC1, SC2, ... SCq} such that the sequence C₁, C₂, ..., Cₙ forms a codeword of a cyclically permutable code. The codes CSC and Cⱼ are 256 chips long, and the transmission of CSC + Cⱼ may occur once every 2560-chip time slot.

The article "A coding-theoretical view on code division multiple access: Two new conructions of CDMA codes", IEEE 4^{th} Vehicular Technology Conference pp.550-553 (1994) notes cyclically permutable codes as comma-free codes in discussion of CDMA coding in an OR channel.

In contrast, for TDD mode the physical synchronization channel only appears in one or two time slots per frame, so the length-16-CFC-modulated primary synchronization code does not easily apply. An alternative proposed TDD mode initial cell search employs a sum of a primary synchronization code (PSC) plus six secondary synchronization codes (SSCs); each code is a 256-chip pseudo-noise sequence, and the codes are orthogonal. In this proposal the initial cell search consists of slot synchronization, frame synchronization and code group identification with scrambling code determination. In particular, during slot synchronization the mobile user employs the PSC to acquire slot synchronization to the strongest cell (strongest received base station transmission): the PSC is common to all cells. A single matched filter (or any similar device matched to the PSC) may be used for detection.

Next, the mobile user employs the six SSCs to find frame synchronization and to identify one out of 32 code groups being used by the base station. Each of the six SSCs is modulated by +1 or -1; this implies 5 bits of information to identify which one of 32 possible code groups is used by the found base station (scrambling codes and midambles), and the sixth SSC is modulated by +1 or -1 to identify whether the time slot is the first or second physical synchronization channel slot in the frame (frame synchronization). Each of the six SSCs is scaled by 1/√6 to make the power of the sum of the six modulated SSCs equal to the power of the PSC. Lastly, the mobile user determines which of the four scrambling codes in the cell's code group is being used by, for example, correlation on the common control physical channel.

However, this TDD mode proposal has problems including low signal to noise ratio in the sum of the six modulated SSCs.

### SUMMARY OF THE INVENTION

The present invention provides TDD mode cell search with comma-free codes from an alphabet of sums of modulated secondary synchronization codes. Preferred embodiments use length 2 or 4 comma-free codes for frames with two time slots for a synchronization channel and non-interleaved or two-level interleaved, respectively. This has advantages including increased signal-to-noise ratios due to the removal of redundancy.

### BRIEF DESCRIPTION OF THE DRAWINGS

The drawings are heuristic for clarity.
Figures 1a-1b show synchronization channel and comma-free codes.
Figure 2 shows a spread spectrum system.
Figures 3a-3b illustrate pseudo-random code and symbols.
Figures 4-5 show a cellular system plus a block diagram of a receiver.
Figures 6-7b illustrate comma-free codes.
Figures 8-15 are simulation results.

### DETAILED DESCRIPTION OF THE PREFERRED EMBODIMENTS

### 1. Overview

Preferred embodiment synchronization methods for UTRA-type TDD mode initial cell search use length 2 or 4 (or more) comma-free codes (CFCs) to encode both frame timing and base station code group information plus frame position for interleaved frames. The use of CFCs effectively removes the redundancy of straightforward coding of frame timing and code group in both time slots occupied by the physical synchronization channel. Some preferred embodiments use CFCs with alphabets generated from scaled sums of two or three QPSK-modulated secondary synchronization codes added to a primary synchronization code. Preferred embodiment spread spectrum communication systems incorporate preferred embodiment synchronization methods.

In preferred embodiment communications systems the base stations and the mobile users could each include one or more digital signal processors (DSP's) and/or other programmable devices with stored programs for performance of the signal processing of the preferred embodiment synchronization methods. The base stations and mobile users may also contain analog integrated circuits for amplification of inputs to or outputs from antennas and conversion between analog and digital; and these analog and processor circuits may be integrated on a single die.. The stored programs may, for example, be in ROM onboard the processor or in external flash EEPROM. The antennas may be parts of RAKE detectors with multiple fingers for each user's signals. The DSP core could be a TMS320C6x or TMS320C5x from Texas Instruments.

### 2. Preferred embodiments with 12 secondary synchronization codes

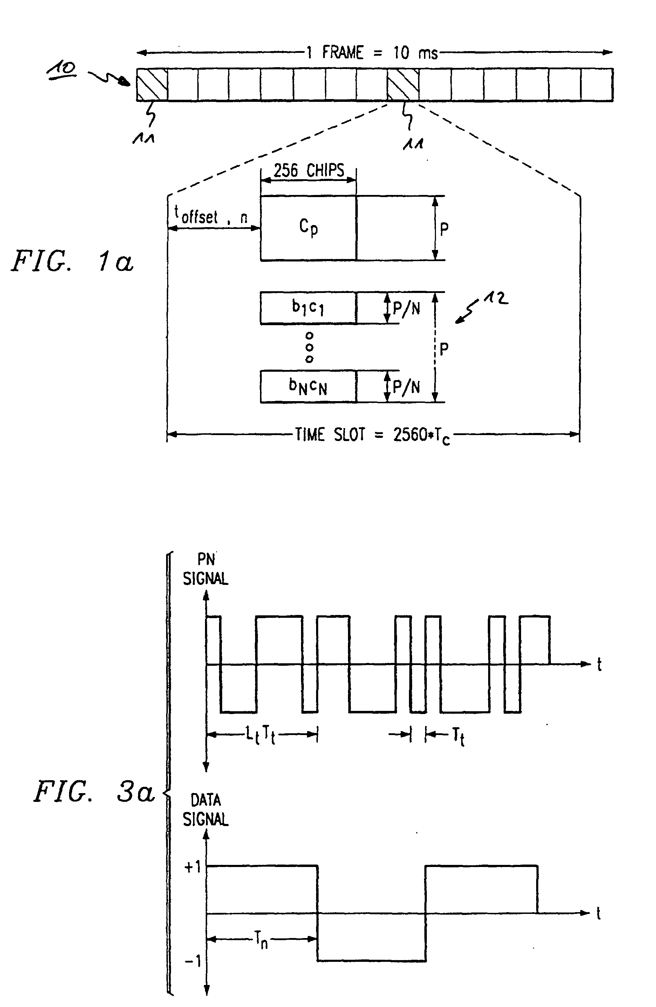

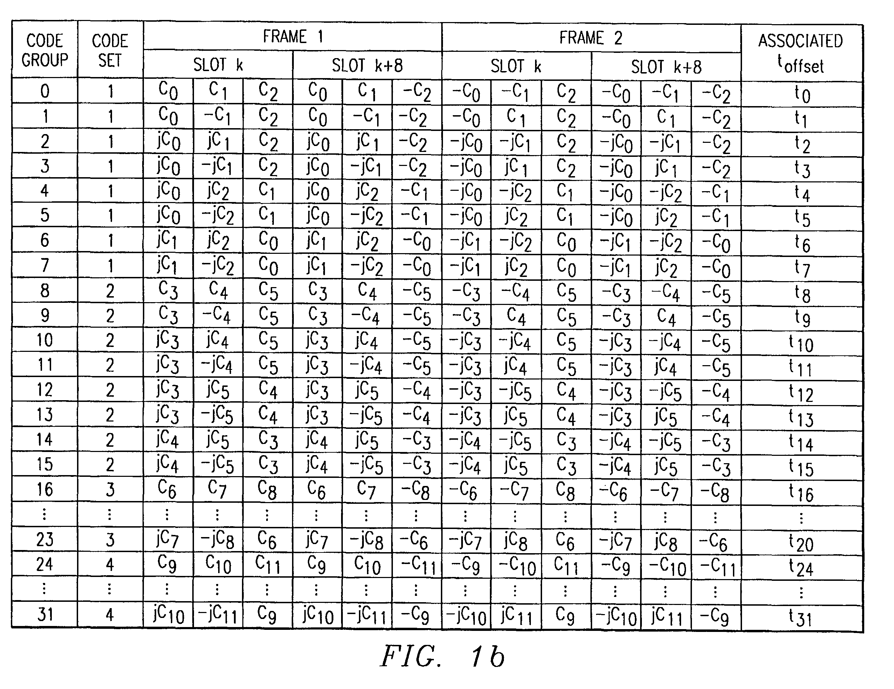

First preferred embodiment initial cell search methods by mobile users in a UTRA system in TDD mode employ the physical synchronization channel as illustrated in Figure 1 a together with two-level frame interleaving. In particular, Figure 1 a shows a 10 ms frame, 15 time slots per frame with 2560 chips per slot; the physical synchronization channel appears in two time slots per frame (namely, slots 0 and 8) and occupies 256 chips in each slot with a time offset from the beginning of the slot.

A base station transmits the sum of a 256-chip primary synchronization code Cₚ plus N (N equals 3 in the example of Figure 1b) 256-chip secondary synchronization codes c₁, .. c_{N} modulated by QPSK symbols b₁ ..., b_{N} (each bᵢ is one of±1,±j) in the synchronization channel. This code set of N secondary synchronization codes {c₁, .. c_{N}} is a subset of {C₀, C₁, ..., C₁₁}, a set of 12 secondary synchronization codes chosen so that {Cₚ, C₀, C₁, ..., C₁₁} form an orthogonal set with each of Cₚ, C₀, C₁, ..., C_{N} being a 256-chip pseudo-noise sequence of ±1 components. For example, the Cᵢ could derive from 256-component Gold codes. The transmitted power of each of the modulated secondary synchronization codes is scaled to 1/N of the power of Cₚ, so the power of the sum of the modulated c₁,..., c_{N} equals the power of Cₚ. Of course, correlation of the sum with cₖ recovers bₖ due to the orthogonality: of the set {Cₚ, C₀, C₁, ..., C₁₁}; that is, bₖ = √N (cₖ, Cₚ + Σbᵢcᵢ/√N〉.

The time offsets vary among the cells and help avoid the interference from neighboring cell synchronization channel transmissions due to all cells broadcasting the same primary synchronization code.

Frames may be interleaved (typically to a depth of 2 or 4) in order to mitigate burst noise. The preferred embodiment CFC has codeword length equal to the number of physical synchronization channel time slots per frame multiplied by the frame interleave depth.

Each cell (base station) belongs to one of 32 code groups (the code group determines which set of four 16-chip scrambling codes contains the scrambling code used by the base station and also determines the time offset of the synchronization channel from the beginning of the time slot). A mobile user must determine the code group during the initial cell search, and the preferred embodiments encode the code group information in a comma-free code with codewords of length 4 using as their alphabet the sums b₁c₁ + ... + b_{N}c_{N} described in the preceding paragraph. The length 4 suffices to resolve which of the two time slots per frame and which of two frame positions in a two-level interleaving of frames is detected. Recall that a comma-free code with codewords of length m has the property that for codewords x = <x(1), x(2), ..., x(m)> and y = <y(1), y(2), ..., y(m)> the sequence <x(i), x(i+1), ..., x(m), y(1), ..., y(i-1)> is not a codeword if i > 1; this includes the case of y = x which are the cyclic shifts of x. Thus the frame timing and frame interleave position information is provided by the comma-free property and the code group information is provided by the modulation code set.

The Table of Figure 1b lists the 32 code groups and corresponding preferred embodiment comma-free codewords of length 4: the first CFC codeword component is the frame 1, slot k column entries of three bᵢcᵢs to sum, the second component the frame 1, slot k+8 column entries, the third component the frame 2, slot k column entries, and the fourth component the frame 2, slot k+8 column entries. For example, reading the third row for code group 2 shows the sum of three modulated SSCs to add to the PSC is (jC₀ + jC₁ + C₂)/√3 in the first time slot of frame 1, (jC₀ + jC₁ -C₂)/√3 in the second time slot of frame 1, (-jC₀ -jC₁ + C₂)/√3 in the first time slot of frame 2, and (-C₀ -jC₁ - C₂)√3 in the second time slot of frame 2.

The codewords of Figure 1b can be generated as follows: for a given code set of three SSCs, e.g., C₀, C₁, and C₂, first form the sum and difference of two of the SSCs: C₀+C₁ and C₀-C₁. Now form a first codeword of length 4 using the sum C₀+C₁ and the third SSC C₂ with in phase (real) modulation: < (C₀+C₁)+C₂, (C₀+C₁)-C₂, -(C₀+C₁)+ C₂, -(C₀+C₁)-C₂ >. Note that the sign of the sum (C₀+C₁) indicates frame number and the sign of C₂ indicates time slot number. Next, form a second codeword by analogy but using the difference C₀-C₁ in place of the sum; that is,. < (C₀-C₁)+C₂, (C₀-C₁)-C₂, -(C₀-C₁)+ C₂, -(C₀-C₁)-C₂ >. Again, the sign of (C₀-C₁) indicates frame number and the sign of C₂ indicates slot number. These two codewords exhaust the 8 possible real coefficient combinations of the code set., C₀, C₁, and C₂; that is, the first codeword used ±(C₀+C₁) ± C₂.) and the second used ±(C₀-C₁) ± C₂. Thus for the third and fourth codewords use some quadrature (imaginary) modulation: j(C₀+C₁) and j(C₀-C₁) in place of C₀+C₁ and C₀-C₁ in the first and second codewords, respectively. That is, the third codeword is <j(C₀+C₁)+C₂, j(C₀+C₁)-C₂, -j(C₀+C₁)+ C₂, -j(C₀+C₁)-C₂ > and similarly for the fourth codeword using j(C₀-C₁). Note that again the sign of the sum (C₀+C₁) or difference (C₀-C₁) indicates frame number and the sign of C₂ indicates time slot number. Next, for the fifth and sixth codewords make the switch C₁ ↔ C₂ in the third and fourth codewords That is, the fifth codeword is <j(C₀+C₂)+C₁, j(C₀+C₂)-C₁, -j(C₀+C₂)+ C₁, -j(C₀+C₂)-C₁ > and similarly for the sixth codeword using j(C₀-C₂) and C₁. Lastly, for the seventh and eighth codewords make the switch C₀ ↔ C₁ in the fifth and sixth codewords to get <j(C₁+C₂)+C₀, j(C₁+C₂)-C₀, -j(C₁+C₂)+ C₀, -j(C₁+C₂)-C₀ > for the seventh codewords and similarly using j(C₁-C₂) and C₀ for the eighth codeword

The other 24 codewords of Figure 1b are similarly generated using code sets {C₃, C₄, C₅}, {C₆, C₇, C₈), and {C₉, C₁₀, C₁₁}.

The time offsets t₀ - t₃₁ are the 32 equispaced possibilities in the 2208 chips (= 2560 - 256 - 96 guard portion) in a slot at which the channel could begin, starting at 0. That is, t₀ = 0, t₁ = 71, t₂ = 142, t₃ = 213, ..., t₃₁ = 2201 chips.

The first preferred embodiment cell search proceeds in three steps as follows.

### Step 1: Time slot synchronization

During the first step the mobile user employs the primary synchronization code (PSC) to acquire time slot synchronization to the strongest cell (strongest received base station): the PSC is common to all cells and consists of a short pseudo-noise sequence (256 chips). A single matched filter (or any similar device matched to the PSC) is used. Because the physical synchronization channel occupies two slots per 10 ms frame, the slot synchronization should be achieved within about 5 ms. The time offset of the channel within the slot will be determined in step 2.

### Step 2. Frame synchronization and code-group identification plus frame position

During the second step the mobile user employs the secondary synchronization codes (SSCs) to find frame synchronization and identify one out of 32 code groups. Each code group is linked to a time offset of the synchronization channel within the slot, thus to a specific frame timing, and also is linked to a set of four scrambling codes (and basic midambles). To detect the position of the next synchronization slot, correlate PSC with the received signal at both 7 and 8 time slots after the slot detected in step 1. (The 7 and 8 arises because frames have 15 time slots.) The received signal at the positions of the synchronization slots is correlated with the PSC and all of the SSCs. These correlations may be done coherently over one or many time slots with phase correction provided by the correlation with PSC. The correlations recover the set of three bᵢ modulations for a time slot. Lookup in the table of Figure 1b yields the code group, time offset of the synchronization channel within the time slot, and the frame timing and interleave position.

### Step 3. Scrambling code identification

During the third step the mobile user determines which of the four scrambling codes (and basic midambles) in the code group the cell is actually using. This may be by, for example, correlations with all four scrambling codes on the common control channel transmissions by the base station.

Preferred embodiment mobile users would have the PSC and SSCs (and scrambling codes and so forth) stored in memory and be programmed to execute the foregoing cell search.

### 3. Code minimum distance

The correlations in step 2 to find the QPSK modulation symbols {bᵢ} are limited by signal-to-noise factors which relate to the minimum distance between possible codeword components being detected. The general minimum distance between two sums of three SSCs with QPSK modulation (e.g., Σ bᵢcᵢ /√3 and Σ bᵢ'cᵢ /√3) occurs when two out of the three modulation symbols are equal and when the differing symbols have one real and the other imaginary. Thus the minimum distance is √2/√3. Similarly, if the modulation symbols were constrained to be real (e.g., BPSK modulation), six SSCs would be required for the same modulation information, and the minimum distance would be 2/√6 = √2/√3, same as three SSCs with QPSK modulation. Contrarily, as Figure 1b illustrates, the preferred embodiments use only half of the QPSK modulation possibilities for each code set: either 0 or 2 imaginary modulations are used; never 1 or 3. This increases the minimum distance between CFC codeword components by √2 to 2/√3. Further, Figure 1 b also shows that decoding a single one of the four components of a CFC codeword determines the code group, frame timing, and frame interleave position because each component (set of b₁, b₂, and b₃) appears only once in the table.

However, the preferred embodiments using CFCs create gains over the simple use of sums of modulated SSCs in each time slot because part of the information is in the ordering (in time) of the sums of modulated SSCs (i.e., the ordering of the components of CFC codewords). Indeed, the use of six SSCs modulated by ±1 in both time slots of a frame with one SSC modulation denoting which time slot and the other five modulated SSCs denoting the code group has redundancy in that the five modulated SSCs are repeated.

### 4. Preferred embodiments with 6 secondary synchronization codes

The second preferred embodiments apply for a physical synchronization channel with only one time slot per frame and with frame interleaving of depth 2. Figure 6 shows the codewords using two code sets of three SSCs to encode the 32 code groups. Basically, the first 16 length-4 codewords of Figure 1b are cut in half to form 32 length-2 codewords of Figure 6. This means that only two code sets are needed.

Of course, for two time slots per frame without frame interleaving the same codewords could be used.

### 5. Preferred embodiments with 16 secondary synchronization codes

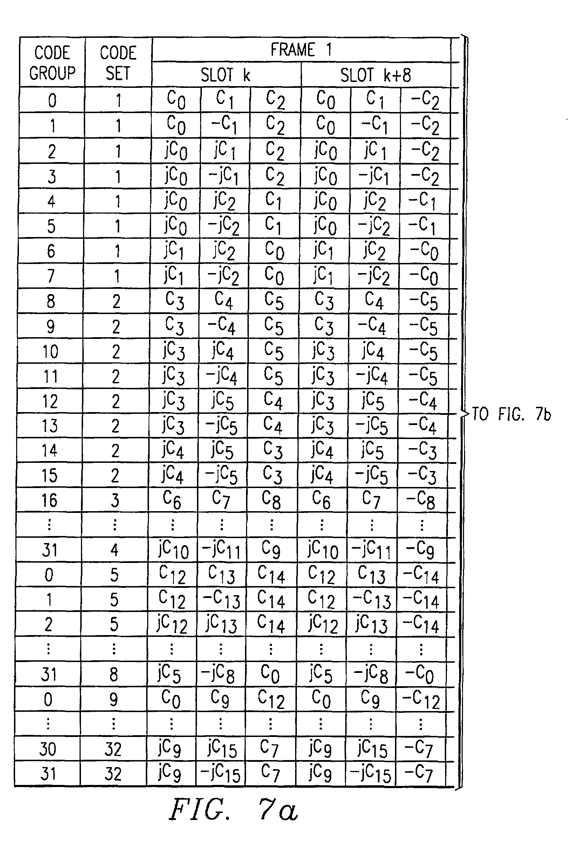

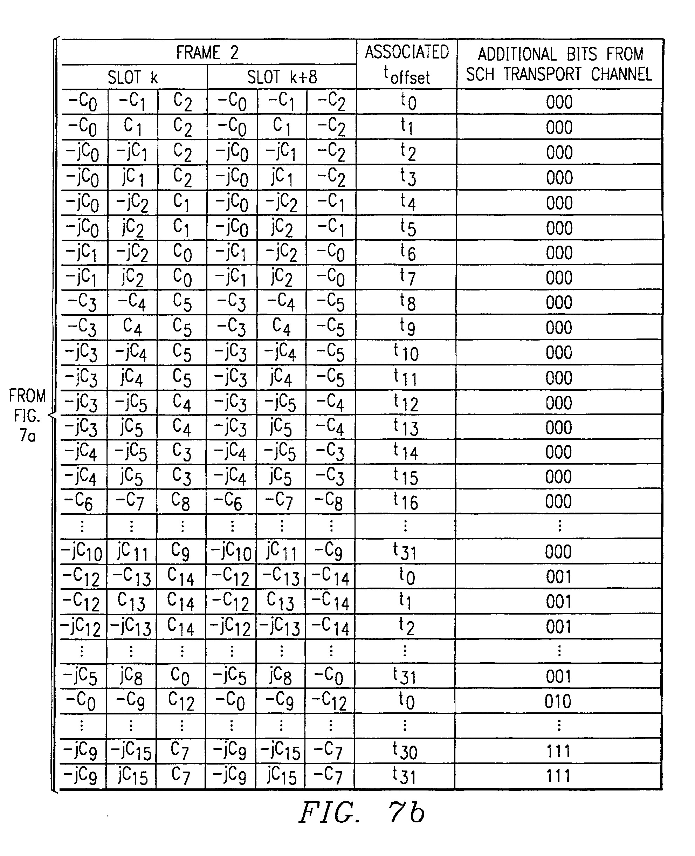

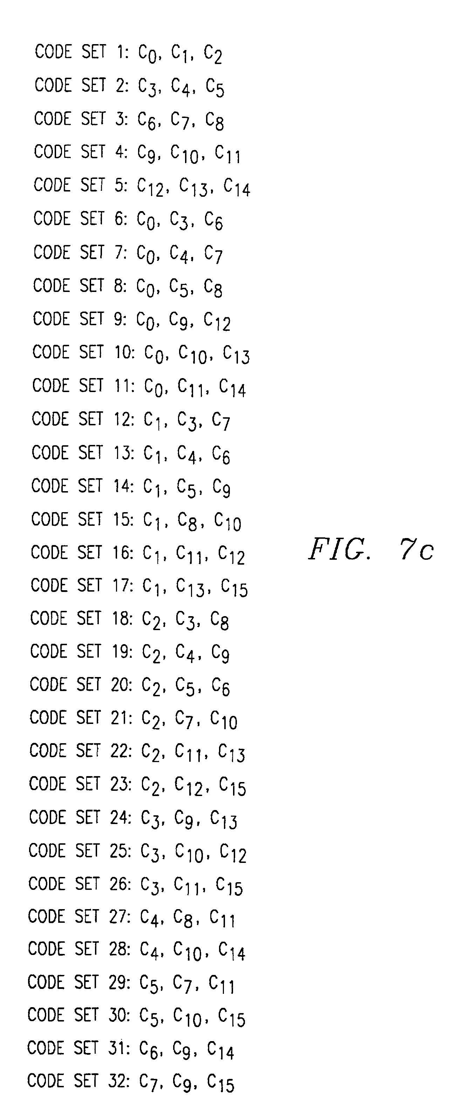

The third preferred embodiments apply to two time slots per frame, frame interleave depth of two, plus three additional bits of information for transport channel identified. As shown in Figure 7a, this increases by a factor of 8 the number of codewords needed compared to Figure 1b. Note that the codewords are generated from a code set of 3 SSCs in the same manner as for Figure 1 b. Thus the number of code sets is increased to 32 by taking combinations with repeats of 16 SSCs: In particular, the code sets could be as in Figure 7b.

The preferred embodiment for choosing code sets is as follows. All code sets are to be disjoint subsets of the set {C₀, .., C₁₅}. The number of code sets depends upon the number of groups to be represented. Each code set can give 8 length-4 comma free codewords. Thus when there are only 32 groups (and therefore 32 codewords), only 4 code sets are required, and choosing 4 disjoint subsets of {C₀, ..., C₁₅} is easy. For the embodiment where there are 256 codewords, 32 code sets are required. Not all code sets can be disjoint given that there are only 16 SSCs. In order to preserve the minimum distance, therefore allow a maximum of one SSC to be the same among any two code sets taken together. For example, {C₀, C₁, C₂}, {D₃, C₄, C₅}, AND {C₀, C₄, C₆} are among the valid code sets which can be used for this case but {C₀, C₄, C₅} is not.

### 6. Preferred embodiments without frame interleaving

The fourth preferred embodiments apply to synchronization with non-interleaved frames but with 2 (or more) time slots per frame occupied by the physical synchronization channel. In particular, with C₁, C₂, ..., C₆ being six SSCs, length 2 CFC codewords using QPSK modulation can be formed: < (Cᵢ +Cₖ)/√2, (Cᵢ -Cₖ)/√2 >, < -(Cᵢ + Cₖ)/√2, -(Cᵢ - Cₖ)/√2 >, < j(Cᵢ + Cₖ)/√2, j(Cᵢ - Cₖ)√2 >, and < -j(Cᵢ + Cₖ)/√2, -j(Cᵢ - Cₖ)/√2 > where Cᵢ and Cₖ are a pair selected from the set C₁, C₂, ..., C₆ without replacement. With six SSCs there are 15 pairs {Cᵢ, Cₖ} and thus 60 codewords of the foregoing type.

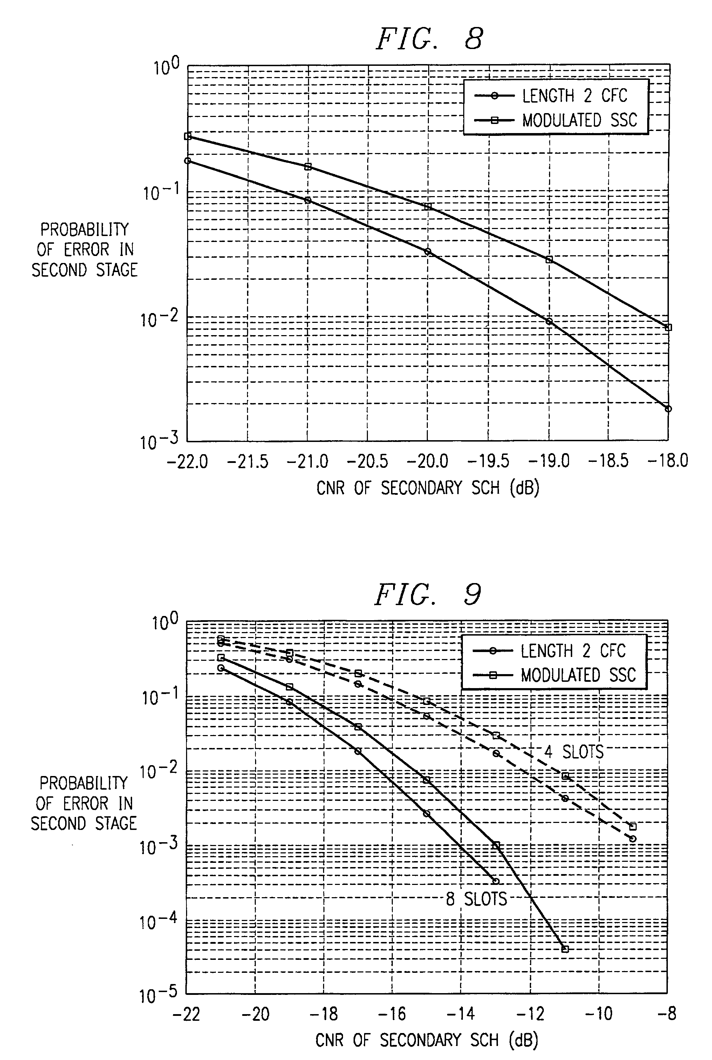

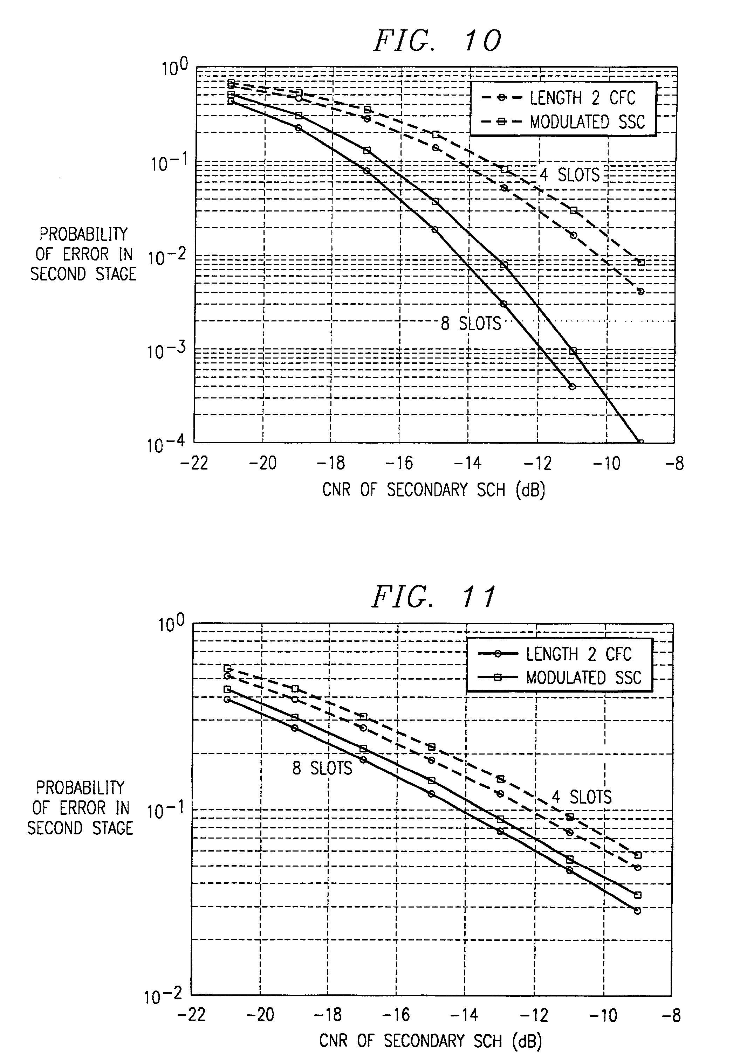

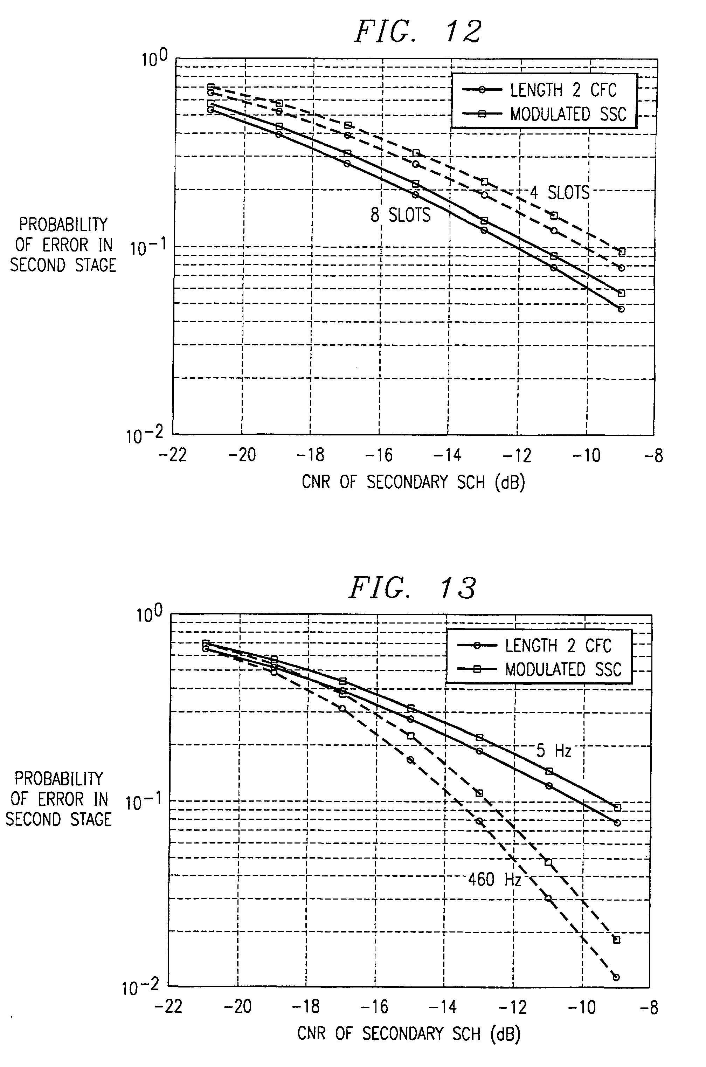

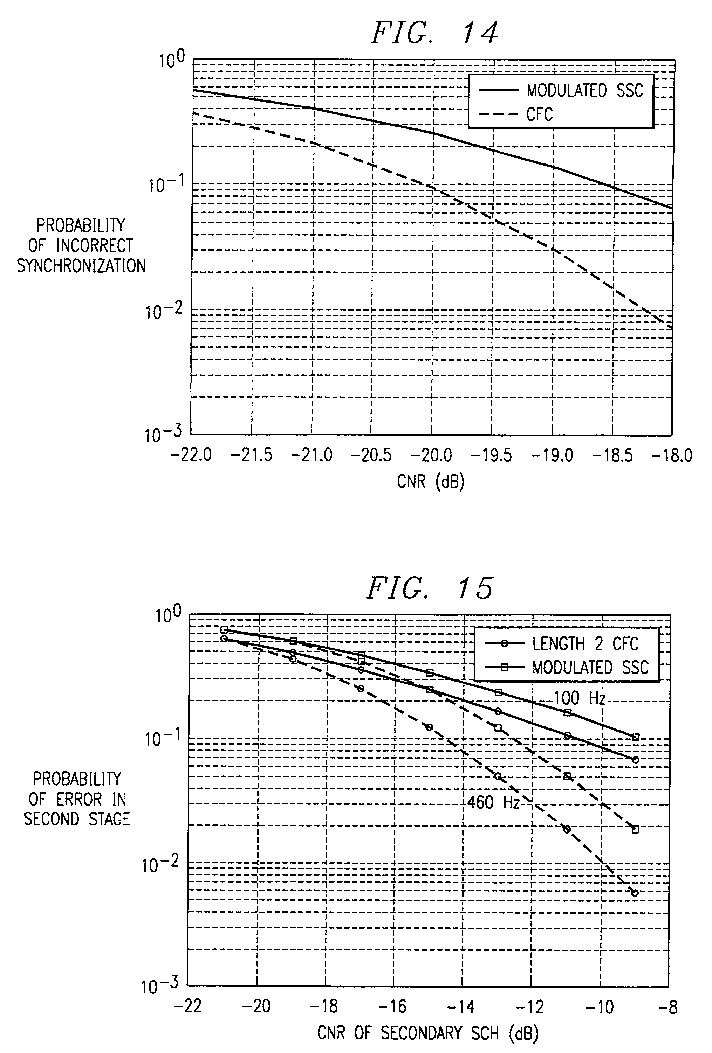

For the case of two time slots per (non-interleaved) frame and 32 code groups to identify with detection in a single time slot, using six SSCs with BPSK modulation and scaled by √6 as previously described, the minimum code distance between two possible detections is 2/√6 = 0.816. In contrast, with the foregoing length 2 CFC codewords the frame timing is inherent in the codeword component (Cᵢ+Cₖ is the first time slot and Cᵢ-Cₖ the second time slot) and the minimum code distance between two possible detections equals 1. Note that 30 of the 32 codewords needed can be with real (in phase) modulation and only two codewords need imaginary (quaternary) modulation. That is, 30 codewords may be of the form : < (Cᵢ + Cₖ)/√2, (Cᵢ - Cₖ)/√2 > and < -(Cᵢ + Cₖ)/√2, -(Cᵢ - Cₖ)/√2 >, and only two imaginary modulated codewords need be used, for example, < j(C₁ + C₂)/√2, j(C₁ - C₂)/√2 > and < -j(C₁ + C₂)/√2, -j(C₁ - C₂)/√2 >. And reflecting the greater minimum code distance, Figures 8-15 illustrate the superior performance of such length 2 CFC codes versus the BPSK-modulated six SSCs.

Further, the computational complexity of the length 2 CFC is comparable to that of the six BSPK-modulated SSCs. In particular, for the six SSCs, 32 correlations are obtained performing length 8 correlations and the Fast Hadamard Transform is applied to these correlation values to obtain the correlations with the 6 SSCs and the PSC, requiring 8x32+2x16xlog₂16+7 = 391 complex additions. Again, the phase of the correlation with the PSC is used as a reference for the correlations with the 6 SSCs. This requires 28 real multiplications and 13 real additions. There are 64 possible combinations (codewords) of the 6 SSCs. Noting that some of these combinations are simply negatives of others and using other redundancies, the 64 combinations require 564 real additions. Averaging the 64 decision variables over K slots requires approximately 64 real additions per slot for large K. Selecting the maximum after averaging over K slots requires (log+2+64)/K compares per slot. This number is the same for both the CFC and the six SSC methods and for large K is very small. So neglect it in the analysis. Thus the six modulated SSC method requires 118 real additons per slot for computing, averaging the decision variables and selecting the maximum.

For the CFC, the multiplication by j is imply flipping the imaginary and real parts. Also, as noted above using ±<(Cᵢ + Cₖ)/√2, (Cᵢ - Cₖ)/√2 > produces 30 codewords so only ±j<(C₁ + C₂)/√2, (C₁ - C₂)/√2 > are needed to complete the 32 required codewords. Again noting that some of these combinations re simply negatives of the others, the method requires 32 additions per slot to obtain the 64 decision variables. Averaging the 64 decision variables over K slots requires approximately 64 real additions per slot for large K. Again neglecting the compares required for selecting the maximum, which is the same for both methods, the length 2 CFC method requires 96 real additions per slot for computing, averaging the decision variables, and selecting the maximum.

### 7. Modifications

The preferred embodiments may be modified in various ways while retaining the features of comma-free codes (CFC) for synchronization in TDD systems in order to remove redundancy. For example, code sets with four or more SSCs could be used; a rotation to modulation by 1+j, 1-j, -1+j, -1-j; and so forth. Note that the use of comma-free codes for TDD permits all time slots (of the synchronization channel) contribute to the distance between codewords to avoid the problem of loss of diversity leading to a loss of codeword separation distance.

## Claims

1. A method for communications synchronization in a mobile receiver (42, 50) for a CDMA communication system (40), comprising:
(a) detecting a comma-free codeword component (12) in a synchronization channel (11) of a signal (10) received from a base station (41); and
(b) decoding said comma-free codeword (12) component,
**characterized in that** said method is applied for time division duplex communications, that said comma-free codeword component (12) is formed from an alphabet of linear combinations of N QPSK-modulated secondary synchronization codes, where N is an integer greater than 1, and that said mobile receiver (42, 50) determines from decoding said comma-free codeword component (12) frame timing information and a code set used by said base station (41).

2. A method according to claim 1, wherein N is equal to 3 and the coefficients in the linear combinations are selected from the set {+1, -1, +j, -j}.

3. A method according to claim 1, wherein said linear combinations are taken from either of 32 code groups, which each contain different linear combinations of 3 adjacent out of in total 12 secondary synchronization codes; and wherein each of the code groups is associated with either of 32 time offset values and either of 2, 4, or 32 code sets.

4. A mobile receiver for a CDMA communication system (40), comprising
(a) a synchronization channel detector (51) operable to detect comma-free codeword components (12) in a received signal (10); and
(b) a decoder (52) for said codeword components (12) and coupled to said detector (51),
**characterized in that** said mobile receiver (42, 50) is adapted for time division duplex communications, that said comma-free codeword components (12) are formed from an alphabet of linear combinations of N QPSK-modulated secondary synchronization codes, where N is an integer greater than 1, and that said mobile receiver (42, 50) is adapted to determine from decoding said comma-free codeword components (12) frame timing information and a code set used by said base station (41).

5. A CDMA mobile receiver according to claim 4, wherein
(a) said detector (51) includes a programmable processor with programming to detect said codeword components (12) as linear combinations of QPSK-modulated synchronization codes, taken from either of 32 code groups, which each contain diffierent linear combinations of 3 adjacent out of in total 12 secondary synchronization codes; and wherein each of the code groups is associated with either of 32 time offset values and either of 2, 4, or 32 code sets.

6. A method for synchronization encoding in a base station of a CDMA communication system (40), comprising:
(a) transmitting comma-free codeword components (12) in a synchronization channel (11) of a signal (10) transmitted by said base station (41);
wherein
(b) said codeword components (12) at least partially identify a transmitter;
**characterized in that** said method is applied for time division duplex communications, that said comma-free codeword components (12) are formed from an alphabet of linear combinations of N QPSK-modulated secondary synchronization codes, where N is an integer greater than 1, and that said base station (41) encodes in said comma-free codeword components (12) frame timing information and information about a code set used to scramble said signal.

7. A method according to claim 6, wherein N is equal to 3 and the coefficients in the linear combinations are selected from the set {+1, -1, +j, -j}.

8. A method according to claim 6, wherein said linear combinations are taken from either of 32 code groups, which each contain different linear combinations of 3 adjacent out of in total 12 secondary synchronization codes; and wherein each of the code groups is associated with either of 32 time offset values and either of 2, 4, or 32 code sets.

9. A base station for a CDMA communication system (40), comprising
(a) a transmitter (30) for comma-free codeword components (12) in synchronization channels (11); wherein
(b) said codeword components (12) at least partially identify the base station (41)
**characterized in that** said base station (41) is adapted for time division duplex communications, that said comma-free codeword components (12) are formed from an alphabet of linear combinations of N QPSK-modulated secondary synchronization codes, where N is an integer greater than 1, and that said base station (41) is adapted to encode in said comma-free codeword components (12) frame timing information and information about a code set used to scramble said signal.

## Patentansprüche

1. Verfahren für die Synchronisation der Kommunikation in einem mobilen Empfänger (42, 50) für ein CDMA-Kommunikationssystem (40), wobei das Verfahren umfasst:
(a) Erfassen einer kommafreien Codewort-Komponente (12) in einem Synchronisationskanal (11) eines von einer Basisstation (41) empfangenen Signals (10); und
(b) Decodieren der kommafreien Codewort-Komponente (12),
**dadurch gekennzeichnet, dass** das Verfahren auf die Zeitduplex-Kommunikation angewendet wird, dass die kommafreie Codewort-Komponente (12) aus einem Alphabet von Linearkombinationen aus N QPSK-modulierten sekundären Synchronisationscodes gebildet ist, wobei N eine ganze Zahl größer als 1 ist, und dass der mobile Empfänger (42, 50) aus der Decodierung der kommafreien Codewort-Komponente (12) Rahmensynchronisationsinformationen und eine von der Basisstation (41) verwendete Code-Menge bestimmt.

2. Verfahren nach Anspruch 1, bei dem N gleich 3 ist und die Koeffizienten in den Linearkombinationen aus der Menge {+1, -1, +j, -j} gewählt werden.

3. Verfahren nach Anspruch 1, bei dem die Linearkombinationen aus einer von 32 Code-Gruppen entnommen werden, die verschiedene Linearkombinationen aus 3 benachbarten von insgesamt 12 sekundären Synchronisationscodes enthalten; und bei dem jeder der Code-Gruppen einer von 32 Zeitversatzwerten und eine von 2, 4 oder 32 Code-Mengen zugeordnet sind.

4. Mobiler Empfänger für ein CDMA-Kommunikationssystem (40), mit
(a) einem Synchronisationskanal-Detektor (51), der so betreibbar ist, dass er kommafreie Codewort-Komponenten (12) in einem empfangenen Signal (10) erfasst; und
(b) einem Decodierer (52) für die Codewort-Komponenten (12), der mit dem Detektor (51) gekoppelt ist,
**dadurch gekennzeichnet, dass** der mobile Empfänger (42, 50) für Zeitduplex-Kommunikationen geeignet ist, dass die kommafreien Codewort-Komponenten (12) aus einem Alphabet von Linearkombinationen von N QPSK-modulierten sekundären Synchronisationscodes gebildet ist, wobei N eine ganze Zahl größer als 1 ist, und dass der mobile Empfänger (42, 50) so beschaffen ist, dass er aus der Decodierung der kommafreien Codewort-Komponenten (12) Rahmensynchronisationsinformationen und eine von der Basisstation (41) verwendete Code-Menge bestimmt.

5. Mobiler CDMA-Empfänger nach Anspruch 4, bei dem
(a) der Detektor (51) einen programmierbaren Prozessor enthält, der so programmiert ist, dass er die Codewort-Komponenten (12) als Linearkombinationen von QPSK-modulierten Synchronisationscodes erfasst, die aus einer von 32 Code-Gruppen entnommen sind, die jeweils verschiedene Linearkombinationen von 3 benachbarten von insgesamt 12 sekundären Synchronisationscodes enthalten; und bei dem jeder der Code-Gruppen einer von 32 Zeitversatzwerten und eine von 2, 4 oder 32 Code-Mengen zugeordnet sind.

6. Verfahren für die Synchronisationscodierung in einer Basisstation eines CDMA-Kommunikationssystems (40), wobei das Verfahren umfasst:
(a) Senden von kommafreien Codewort-Komponenten (12) in einem Synchronisationskanal (11) eines durch die Basisstation (41) gesendeten Signals (10); wobei
(b) die Codewort-Komponenten (12) wenigstens teilweise einen Sender identifizieren;
**dadurch gekennzeichnet, dass** das Verfahren für Zeitduplex-Kommunikationen angewendet wird, dass die kommafreien Codewort-Komponenten (12) aus einem Alphabet von Linearkombinationen von N QPSK-modulierten sekundären Synchronisationscodes gebildet sind, wobei N eine ganze Zahl größer als 1 ist, und dass die Basisstation (41) in den kommafreien Codewort-Komponenten (12) Rahmensynchronisationsinformationen sowie Informationen über eine Code-Menge, die für die Verwürfelung des Signals verwendet werden, codiert.

7. Verfahren nach Anspruch 6, bei dem N gleich 3 ist und die Koeffizienten in den Linearkombinationen aus der Menge {+1, -1, +j, -j} gewählt werden.

8. Verfahren nach Anspruch 6, bei dem die Linearkombinationen aus einer von 32 Code-Gruppen entnommen werden, die jeweils verschiedene Linearkombinationen von 3 benachbarten von insgesamt 12 sekundären Synchronisationscodes enthalten; und bei dem jeder der Code-Gruppen einer von 32 Zeitversatzwerten und eine von 2, 4 oder 32 Code-Mengen zugeordnet sind.

9. Basisstation für ein CDMA-Kommunikationssystem (40), mit
(a) einem Sender (30) für kommafreie Codewort-Komponenten (12) in Synchronisationskanälen (11); wobei
(b) die Codewort-Komponenten (12) wenigstens teilweise die Basisstation (41) identifizieren,
**dadurch gekennzeichnet, dass** die Basisstation (41) für Zeitduplex-Kommunikationen geeignet ist, dass die kommafreien Codewort-Komponenten (12) aus einem Alphabet von Linearkombinationen von N QPSK-modulierten sekundären Synchronisationscodes gebildet sind, wobei N eine ganze Zahl größer als 1 ist, und dass die Basisstation (41) in den kommafreien Codewort-Komponenten (12) Rahmensynchronisationsinformationen sowie Informationen über eine Code-Menge, die für die Verwürfelung des Signals verwendet werden, codieren kann.

## Revendications

1. Procédé de synchronisation de communications dans un récepteur mobile (42, 50) pour un système de communication CDMA (40), comprenant:
(a) la détection d'une composante de mot de code sans virgule (12) dans un canal de synchronisation (11) d'un signal (10) reçu d'une station de base (41); et
(b) le décodage de ladite composante de mot de code sans virgule (12),
**caractérisé en ce que** ledit procédé est appliqué pour des communication en duplex par répartition dans le temps, que ladite composante de mot de code sans virgule (12) est formée à partir d'un alphabet de combinaisons linéaires de N codes de synchronisation secondaires modulés selon une modulation QPSK, N étant un entier supérieur à 1, et que ledit récepteur mobile (42, 50) détermine, à partir du décodage dudit composant de mot de code sans virgule (12), l'information de cadencement de trame et un ensemble de codes utilisé par ladite station de base (41).

2. Procédé selon la revendication 1, selon lequel N est égal à 3 et les coefficients dans les combinaisons linéaires sont sélectionnés à partir de l'ensemble {+1,-1,+j,-j}.

3. Procédé selon la revendication 1, selon lequel lesdites combinaisons linéaires sont prélevées de l'un ou l'autre de trente-deux groupes de codes, qui contiennent chacun différentes combinaisons linéaires de trois codes adjacents parmi un total de 12 codes de synchronisation secondaires; et selon lequel chacun des groupes de codes est associé à une quelconque de 32 valeurs de décalage temporel et à l'un ou l'autre de 2, 4 ou 32 ensembles de codes.

4. Récepteur mobile pour un système de communication CDMA (40), comprenant
(a) un détecteur (51) de canaux de synchronisation, pouvant agir pour détecter des composants de mots de codes sans virgule (12) dans un signal reçu (10); et
(b) un décodeur (52) pour lesdits composants de mots de codes (12) et couplé audit détecteur (5 1 ),
**caractérisé en ce que** ledit récepteur mobile (42, 50) est adapté pour des communications en duplex par répartition dans le temps, que lesdits composants de mots de codes sans virgule (12) sont formés à partir d'un alphabet de combinaisons linéaires de N codes de synchronisation secondaires modulés selon une modulation QPSK, N étant un entier supérieur à 1, et que ledit récepteur mobile (42, 50) est adapté pour déterminer, à partir du décodage dudit composant de mot de code sans virgule (12), l'information de cadencement de trame et un ensemble de codes utilisé par ladite station de base (41).

5. Récepteur mobile CDMA selon la revendication 4, dans lequel
(a) ledit détecteur (51) inclut un processeur programmable avec une programmation pour détecter des composants de mots de codes (12) sous la forme de combinaisons linéaires de codes de synchronisation modulés selon la modulation QPSK, tiré d'un lot de 32 groupes de codes, qui contiennent chacun différentes combinaisons linéaires de 3 codes adjacents parmi un total de 12 codes de synchronisation secondaires; et dans lequel chacun des groupes de codes est associé à l'une ou l'autre de 32 valeurs de décalage temporel et à l'un ou l'autre de 2, 4 ou 32 ensemble de codes.

6. Procédé pour le codage de synchronisation dans une station de base d'un système de communication CDMA (40), comprenant:
(a) la transmission de composantes de mots de codes sans virgule (12) dans un canal de synchronisation (11) d'un signal (10) transmis par ladite station de base (41);
selon lequel
(b) lesdites composantes de mots de codes (12) identifient au moins partiellement un émetteur;
**caractérisé en ce que** ledit procédé est appliqué pour des communications en duplex par répartition dans le temps, que lesdites composantes de mots de codes sans virgule (12) sont formées à partir d'un alphabet de combinaisons linéaires de N codes de synchronisation modulés selon une modulation QPSK, N étant un entier supérieur à 1 et que ladite station de base (41) code dans lesdites composantes de mots de codes sans virgule (12), une information de cadencement de trame et une information concernant un ensemble de code utilisé pour brouiller ledit signal.

7. Procédé selon la revendication 6, selon lequel N est égal à 3 et les coefficients dans les combinaisons linéaires sont choisis dans l'ensemble {+1,-1,+j,-j}.

8. Procédé selon la revendication 6, dans lequel lesdites combinaisons linéaires sont prélevées de l'un ou l'autre de 32 groupes de codes, qui contiennent chacun des combinaisons linéaires différentes de 3 codes adjacents parmi un ensemble de 12 codes de synchronisation secondaires, et selon lequel chacun des groupes de codes est associé à l'une ou l'autre de 32 valeurs de décalage temporel et l'un ou l'autre de 2, 4 ou 32 ensembles de codes.

9. Station de base pour un système de communication CDMA (40), comprenant
(a) un émetteur (30) pour des composantes de mots de codes sans virgule (12) dans des canaux de synchronisation (11);
dans lequel
(b) lesdites composantes de mots de codes (12) identifient au moins partiellement la station de base (41);
**caractérisée en ce que** ladite station de base (41) est adaptée pour des communications en duplex par répartition dans le temps, que lesdites composantes de mots de codes sans virgule (12) sont formées à partir d'un alphabet de combinaisons linéaires de N codes de synchronisation secondaires modulés selon une modulation QPSK, N étant un entier supérieur à 1, et que ladite station de base (41) est adaptée pour coder, dans lesdites composantes de mots de codes sans virgule (12), une information de cadencement de trame et une information concernant un ensemble de codes utilisé pour brouiller ledit signal.
